# EUROPEAN PATENT APPLICATION

(11) **EP 4 538 643 A1**
(43) Date of publication of application: **16.04.2025**
(21) Application number: 24199061.3
(22) Date of filing: 06.09.2024
(51) Int. Cl.: G01C 21/00, G08G 1/01, G08G 1/16

(54) **METHOD AND SYSTEM FOR MEASURING EXTRINSIC CRASH RISK**

(30) Priority: 08.09.2023 US 202363537397 P
(71) Applicant: Cambridge Mobile Telematics Inc., Cambridge, MA 02142 (US)
(72) Inventor: COLLINS, John, Cambridge, 02142 (US); PARK, Jun-Geun, Cambridge, 02142 (US); CHEN, Ruilin, Cambridge, 02142 (US); STEELE, Patrick, Cambridge, 02142 (US); BALAKRISHNAN, Hari, Cambridge, 02142 (US); LIANG, Yulan, Cambridge, 02142 (US)
(74) Representative: Mewburn Ellis LLP

(57) **Abstract**

Techniques for measuring extrinsic crash risk are provided. In some examples, a plurality of segments are instantiated in a road segment datastore, with each segment corresponding to a physical road segment in a geographic area and including segment attributes derived from digital map data as well as a risk attribute. From the digital map data, pairs of physical road segments that intersect are determined such that each pair has a corresponding pair of segments in the road segment datastore, and each segment is included in at least one pair. A connection between each segment in each pair is created in the datastore comprising connectivity attributes derived from the digital map data. Based on the segment attributes for a segment, as well as the one or more paired segments and their connectivity attributes, the risk attribute for each segment is updated in the road segment datastore.

## Description

### CROSS-REFERENCES TO RELATED APPLICATIONS

This application claims priority to U.S. Provisional Patent Application No. 63/537,397, filed on September 8, 2023, entitled "Method and System for Measuring Extrinsic Crash Risk," the disclosure of which is hereby incorporated by reference in its entirety for all purposes.

### BACKGROUND

When driving a motor vehicle, there is always a risk of being involved in a crash. At any given time during a driving event, the likelihood or risk of being involved in a crash may be related to many classes or types of factors, including factors intrinsic to the driver or vehicle as well as extrinsic factors that are out of the control of the driver. Despite the progress made in the area of measuring extrinsic risk associated with road networks, there is a need in the art for improved methods and systems related to measuring extrinsic crash risk.

### SUMMARY

Embodiments of the present invention generally relate to measuring extrinsic crash risk. In some embodiments, a computer-implemented method of mapping driving risk in a geographic area is provided. The method may include instantiating, in a road segment datastore, a plurality of segments, wherein each segment of the plurality of segments has a corresponding physical road segment of a plurality of physical road segments in the geographic area. In some embodiments, each segment of the plurality of segments comprises segment attributes derived from digital map data for the corresponding physical road segment, and a risk attribute. The method may further include determining, from the digital map data, pairs of physical road segments that intersect, wherein each pair of physical road segments that intersect has a corresponding pair of segments in the road segment datastore, and each segment of the plurality of segments is included in at least one pair of segments. The method may further include creating, in the road segment datastore, a connection between each segment in each pair of segments. In some embodiments, the connection between each pair of segments in the road segment datastore comprises connectivity attributes derived from the digital map data. The method may further include updating, in the road segment datastore, the risk attribute for each segment of the plurality of segments that is connected to one or more paired segments based on: the segment attributes for the segment; the segment attributes for the one or more paired segments; and the connectivity attributes between the segment and the one or more paired segments.

In some embodiments, the connectivity attributes include one or more of a ramp direction attribute, a speed limit differential attribute, a number of segments in proximity to an intersection attribute, an intersection angle attribute, movement restriction attributes, a cross traffic attribute, or a cross traffic protection attribute. In some embodiments, the risk attribute for each segment of the plurality of segments is updated by a segment-level crash-risk prediction model executed on the plurality of segments and the connection between each pair of segments in the road segment datastore.

In some embodiments, the segment-level crash-risk prediction model uses a graph neural network (GNN) and the method further includes: receiving truth data comprising locations of known vehicle crashes within the geographic area; and training the GNN to predict a crash rate for each segment using the truth data. In some embodiments, the GNN is trained to minimize a value of a Poisson loss function that provides an expected number of crashes for a given segment of the plurality of segments.

In some embodiments, the risk attribute for a segment represents a crash rate per traversal of the segment and the method further includes: receiving, from a mobile device, a start location and an end location within the geographic area; identifying, in the road segment datastore, a sequence of segments between the start location and the end location that results in a lowest total crash rate compared to a second sequence of segments between the start location and the end location; and causing the mobile device to display a route on a map of the geographic area that comprises the sequence of segments between the start location and the end location. In some embodiments, the start location, the end location, and the second sequence of segments are identified from sensor data collected by the mobile device during a trip in a vehicle.

In some embodiments, the method further includes generating an aggregate risk attribute for the geographic area based on one or more risk attributes in the road segment datastore. In some embodiments, the segment attributes for each segment of the plurality of segments comprise static segment attributes and dynamic segment attributes, and wherein the dynamic segment attributes comprise traffic risk attributes and a traffic volume attribute. In some embodiments, the static segment attributes include one or more of a segment curvature attribute, a number of lanes attribute, a speed limit attribute, a directionality attribute, a traffic median attribute, a ramp attribute, a lane marker attribute, traffic control signage attributes, a bicycle lane attribute, a pedestrian crossing attribute, or a street light attribute.

In some embodiments, the method further includes receiving sensor data collected by a telematics device disposed in a vehicle during a traversal of a physical road segment of the plurality of physical road segments for each traversal of a plurality of traversals of the physical road segment. In some embodiments, the method further includes updating the traffic volume attribute for a segment in the road segment datastore that corresponds to the physical road segment based on the sensor data received for each traversal of the plurality of traversals. In some embodiments, the method further includes detecting, for each respective traversal of the plurality of traversals, risk-related driving attributes from the sensor data; and updating the traffic risk attributes for the segment in the road segment datastore based on the risk-related driving attributes derived for each respective traversal of the plurality of traversals. In some embodiments, the risk-related driving attributes include one or more of a speeding attribute, a hard braking attribute, a hard acceleration attribute, a hard cornering attribute, or a distracted driving attribute. In some embodiments, updating the traffic risk attributes for the segment in the road segment datastore comprises determining, from the risk-related driving attributes derived for each respective traversal of the plurality of traversals, a frequency of each risk-related driving attribute.

In some embodiments, a crash-risk system is provided that comprises a crash-risk modeling server system. The crash-risk modeling server system may include: a road segment datastore; one or more processors; and a memory storing a set of instructions which, when executed by the one or more processors, cause the one or more processors to perform operations that may include receiving digital map data for a geographic area. The operations may further include instantiating, in the road segment datastore, a plurality of segments, wherein each segment of the plurality of segments has a corresponding physical road segment of a plurality of physical road segments in the geographic area. In some embodiments, each segment of the plurality of segments comprises: segment attributes derived from the digital map data for the corresponding physical road segment; and a risk attribute. The operations may further include determining, from the digital map data, pairs of physical road segments that intersect, wherein each pair of physical road segments that intersect has a corresponding pair of segments in the road segment datastore, and each segment of the plurality of segments is included in at least one pair of segments. The operations may further include creating, in the road segment datastore, a connection between each segment in each pair of segments. In some embodiments, the connection between each pair of segments in the road segment datastore comprises connectivity attributes derived from the digital map data. The operations may further include updating, in the road segment datastore, the risk attribute for each segment of the plurality of segments that is connected to one or more paired segments based on: the segment attributes for the segment; the segment attributes for the one or more paired segments; and the connectivity attributes between the segment and the one or more paired segments.

In some embodiments, the risk attribute for a segment represents a crash rate per traversal of the segment. In some embodiments, the crash-risk system further comprises an application executing on a mobile device. In some embodiments, the operations further include: receiving, from the application executing on the mobile device, a start location and an end location within the geographic area; identifying, in the road segment datastore, a sequence of segments between the start location and the end location that results in a lowest total crash rate compared to a second sequence of segments between the start location and the end location; and transmitting the sequence of segments between the start location and the end location to the application executing on the mobile device via one or more network connections, wherein in response to receiving the sequence of segments, the application presents the sequence of segments on a map of the geographic area via a display of the mobile device. In some embodiments, the start location, the end location, and the second sequence of segments are identified from sensor data collected by the application while the mobile device is disposed in a vehicle during a trip.

In some embodiments, the crash-risk system further comprises a telematics device disposed in a vehicle. In some embodiments, the operations further include receiving sensor data collected by the telematics device during each traversal of a plurality of traversals of a physical road segment of the plurality of physical road segments. In some embodiments, the operations further include updating a traffic volume attribute for a segment in the road segment datastore that corresponds to the physical road segment based on the sensor data received for each traversal of the plurality of traversals. In some embodiments, the operations further include: detecting, for each traversal of the plurality of traversals, risk-related driving attributes from the sensor data; and updating traffic risk attributes for the segment in the road segment datastore based on the risk-related driving attributes derived for each traversal of the plurality of traversals.

In some embodiments, a non-transitory machine-readable storage medium is provided that includes instructions which, when executed by one or more processors of a crash-risk system, cause the one or more processors to perform operations comprising instantiating, in a road segment datastore, a plurality of segments, wherein each segment of the plurality of segments has a corresponding physical road segment of a plurality of physical road segments in a geographic area. In some embodiments, each segment of the plurality of segments comprises: segment attributes derived from digital map data for the corresponding physical road segment; and a risk attribute. The operations may further include determining, from the digital map data, pairs of physical road segments that intersect, wherein each pair of physical road segments that intersect has a corresponding pair of segments in the road segment datastore, and each segment of the plurality of segments is included in at least one pair of segments. The operations may further include creating, in the road segment datastore, a connection between each segment in each pair of segments. In some embodiments, the connection between each pair of segments in the road segment datastore comprises connectivity attributes derived from the digital map data. The operations may further include updating, in the road segment datastore, the risk attribute for each segment of the plurality of segments that is connected to one or more paired segments based on: the segment attributes for the segment; the segment attributes for the one or more paired segments; and the connectivity attributes between the segment and the one or more paired segments.

### BRIEF DESCRIPTION OF THE DRAWINGS

Aspects and features of the various embodiments will be more apparent by describing examples with reference to the accompanying drawings, in which:
FIG. 1 illustrates an embodiment of a system for measuring extrinsic crash risk according to aspects of the present disclosure.
FIG. 2 is a simplified block diagram illustrating an example of a crash-risk modeling server system according to aspects of the present disclosure.
FIG. 3 is a simplified flow diagram illustrating exemplary crash-risk modeling according to aspects of the present disclosure.
FIGS. 4A and 4B illustrate exemplary representations of road segments in a geographic area according to aspects of the present disclosure.
FIGS. 5A - 5C illustrate additional exemplary representations of road segments in a geographic area according to aspects of the present disclosure.
FIG. 6 illustrates an exemplary representation of road segment risk modeling according to aspects of the present disclosure.
FIGS. 7A and 7B illustrate exemplary representations of risk-based trip routing according to aspects of the present disclosure.
FIG. 8 illustrates an example of a method of mapping extrinsic driving risk in a geographic area according to aspects of the present disclosure.
FIG. 9 illustrates an example of a method of rating driver risk according to aspects of the present disclosure.
FIG. 10 illustrates an example of a method of risk-based trip routing according to aspects of the present disclosure.

### DETAILED DESCRIPTION

While certain embodiments are described, these embodiments are presented by way of example only and are not intended to limit the scope of protection. The apparatuses, methods, and systems described herein may be embodied in a variety of other forms. Furthermore, various omissions, substitutions, and changes in the form of the example methods and systems described herein may be made without departing from the scope of protection.

When driving a motor vehicle, there is always a risk of being involved in a crash. At any given time during a driving event, the likelihood, or risk, of being involved in a crash may be related to many classes or types of factors. For example, the abilities and habits of an individual driver, such as their tendency to speed and/or failure to pay attention to road conditions, may affect their own risk of causing a crash involving themselves and potentially others. As another example, the vehicle itself may affect the likelihood of being involved in a crash, as some vehicles have better safety features or systems designed to reduce or avoid crashes compared to other vehicles. As a third example, the properties of the environment through which the driver and motor vehicle are passing can affect the likelihood of being involved in a crash.

This third class of factors may represent extrinsic risk factors, or risks that are not under the control of a driver. They include local properties of the road network, such as blind spots or intersections that often cause hard braking, as well as localized tendencies of other drivers to engage in risky driving activities, such as phone distraction or excessive speeding, which elevate the risk levels of anyone else sharing the road. Extrinsic risk models the risk arising from driving on a set of road segments, regardless of how safe an individual driver and/or their specific vehicle may be.

The ability to quantify and mitigate extrinsic risk is important to insurers, city infrastructure planners, and drivers. However, existing methods and systems of quantifying extrinsic risk suffer from various shortcomings that result in inaccurate assessments or overly broad estimates. For example, due to various data processing limitations, some risk models may be unable to evaluate more complex collections of data, resulting in inaccurate assessments based on data that excludes important factors and/or features of the environment. As another example, some models rely heavily on historical crash data, which results in a tendency to overestimate the effect of prior crashes on future crashes and missing many crashes because they often do not occur in the same place.

Embodiments described herein address these and other challenges associated with existing technology by providing systems and methods for quantifying extrinsic driver risk at a fine spatial granularity, such as at the street-level and/or road-segment-level, within geographic areas. Utilizing novel methods of modeling road network as a data structure, advanced Machine Learning (ML) and Neural Network (NN) technologies can be trained to generate risk classifications based on increasingly more complex sets of data, such as the relationships between adjacent, intersecting, or nearby road segments. By considering not only the properties of an individual road segment, but also the properties of adjacent road segments, their connections, and the localized driving behavior of drivers and vehicles, techniques described herein may provide a more accurate quantification of the extrinsic risk per traversal for each physical road segment within a geographic area.

The systems and methods described herein may represent numerous improvements and benefits over existing technology. For example, paired with individual details related to a single driver, insurance companies can generate individualized assessments of a driver's risk rating with more accuracy than ever before. As another example, navigation techniques and technologies may use the systems and methods described herein to identify safer routes between locations. In yet another example, the systems and methods described herein may be used to predict the change in extrinsic risk that may occur in the future as a result of minor changes to the properties of a physical road segment or increases in traffic volume.

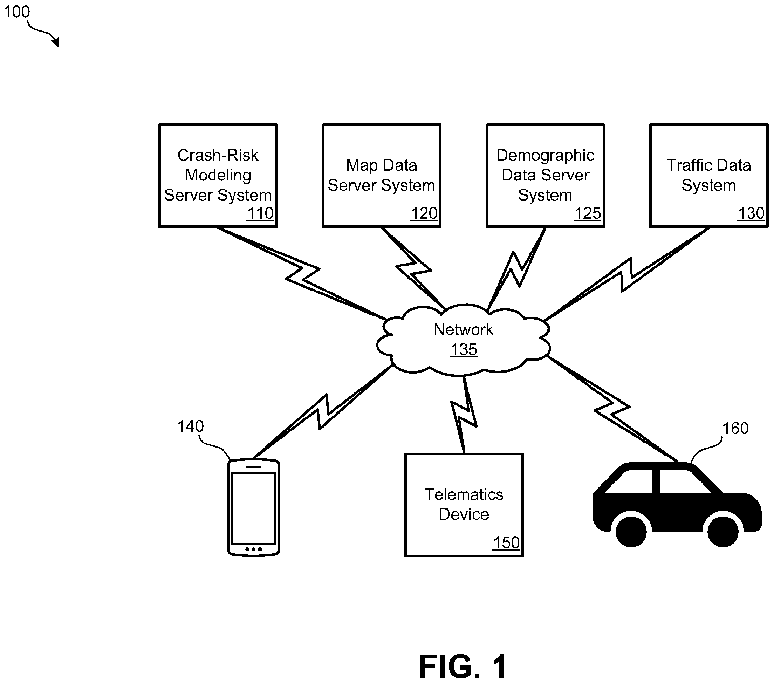

Further detail regarding the quantification of extrinsic crash risk at the street-level and/or road-segment-level is provided in relation to the figures. **FIG. 1** illustrates an embodiment of a system 100 for measuring extrinsic crash risk. System 100 can include: crash-risk modeling server system 110; map data server system 120; demographic data server system 124; traffic data system 130; network 135; mobile device 140; telematics device 150; and vehicle 160. In some embodiments, one or more of the components of system 100 may be communicatively connected to other components of system 100 via network 135.

Crash-risk modeling server system 110 can include one or more processors configured to perform various functions, such as mapping road segments within a geographic area and predicting crash risk at the street-level and/or road-segment-level, as further described herein. Crash-risk modeling server system 110 can include one or more physical servers running one or more processes. Crash-risk modeling server system 110 can also include one or more processes distributed across a cloud-based server system. In some embodiments, crash-risk modeling server system 110 is connected over network 135 to any or all of the other components of system 100.

For instance, crash-risk modeling server system 110 may connect to map data server system 120 to receive digital map data for one or more geographic areas. Map data server system 120 may be a server system, such as a cloud-based server system, connected through network 135 and capable of running one or more processes related to collecting, generating, and/or providing digital map data. In some embodiments, map data server system 120 is a commercially available mapping service, such as OpenStreetMape, and/or is communicatively connected to one or more commercially available mapping services to collect digital map data for various geographic areas of interest. For example, map data server system 120 may request digital map data for a geographic area of interest via one or more application programming interfaces (APIs) provided by one or more commercially available mapping services. Upon receiving the digital map data, map data server system 120 may store the digital map data in one or more data stores. For example, map data server system 120 may store the digital map data received from each mapping service in the format in which it was received and/or map data server system 120 may convert the received digital map data into universal or common format.

Additionally, or alternatively, map data server system 120 may include one or more processes that generate digital map data based on other types of data, such as aerial imagery, telematics data, and the like. For example, map data server system 120 may receive satellite or other aerial imagery of a geographic area and apply one or more image processing algorithms to identify roadways and/or road segments within a geographic area. As another example, map data server system 120 may receive collections of telematics data, as described further herein, that track the movements of one or more vehicles within a geographic area. Based on the movements of the one or more vehicles, the locations of one or more road segments may be derived. Additionally, or alternatively, telematics data may be used to supplement previously collected and/or generated digital map data. For example, based on telematics data indicating that every vehicle traveling along a particular road segment has stopped at a same location, digital map data for the particular road segment may be updated to indicate the presence of a previously unidentified stop sign.

Digital map data may include one or more structured collections of data points, lines, polygons, and the like that represent information on the geometry and properties of streets and road segments within a geographic area. Digital map data may further represent the physical layout of a street network using spatial coordinates, such as latitude and longitude, and may encode the connectivity between individual road segments. The geographic area represented by digital map data may range in size from a single intersection to a census block group, a neighborhood, a city, a state, a country, or any suitable geographic area within which a connection of roadways have been created for vehicular travel.

Digital map data may include information that can be used to derive various static properties or attributes associated with road networks, roadways, and/or individual physical road segments within a geographic area. As described in relation to road segments, static attributes may identify permanent or semi-permanent characteristics of a road segment. For example, static attributes may identify the type of a roadway or segment (e.g., highway, residential, secondary, etc), the dimensions of the road segment, the number of lanes in the road segment, the number of traffic directions, the curvature of the road segment, the type of dividers between lanes and/or between lanes traveling in different directions, the existence of pedestrian crossings, the existence and types of signage (e.g., stop signs, traffic signals, yield signs, merge signs, etc.), posted speed limits, the existence and type of lighting on a roadway, and the like. Put differently, while static road segment attributes may change, such as when a speed limit is changed or a new traffic signal is installed, static attributes do not depend on and/or are not affected by changes in traffic flow and/or traffic patterns.

Digital map data may further include information that can be used to derive various connectivity properties and/or connectivity attributes associated with each intersection between physical road segments in the geographic area that intersect. As described in relation to physical road segment intersections, connectivity attributes may identify permanent and/or semi-permanent characteristics of a physical intersection. For example, connectivity attributes may identify the angle at which two intersecting road segments meet, whether the segments are on an exit from or entry onto a highway, the difference in posted speed limits between the road segments, how many road segments are within a pre-determined distance of each other at an intersection, whether there are any restrictions in movement between intersecting road segments, whether traversing an intersection may involve driving in the face of opposing traffic, whether there are protected traffic signals covering the traversal of an intersection, and the like.

Crash-risk modeling server system 110 may connect to demographic data server system 125 to receive demographic data for one or more geographic areas. Demographic data server system 125 may be a server system, such as a cloud-based server system, connected through network 135 and capable of running one or more processes related to collecting, generating, and/or providing demographic data. In some embodiments, demographic data server system 125 is a commercially and/or publicly available service or data repository available from one or more governmental and/or statistical organizations, such as the United States Census Bureau and/or state and local government agencies, and/or is communicatively connected to one or more commercially and/or publicly available demographic data sources to collect demographic data for various geographic areas of interest. For example, demographic data server system 125 may request demographic data for a geographic area of interest via one or more application programming interfaces (APIs) provided by one or more commercially and/or publicly available sources. Upon receiving the demographic data, demographic data server system 125 may store the demographic data in one or more data stores. For example, demographic data server system 125 may store the demographic data received from each source in the format in which it was received and/or demographic data server system 125 may convert the received demographic data into universal or common format.

Additionally, or alternatively, demographic data server system 125 may include one or more processes that generate demographic data based on other types and/or sources of data. For example, when operated by an entity that is legally and ethically authorized to maintain and protect personally identifiable information, such as an automobile or other insurance company, crash-risk modeling server system 110 and/or demographic data server system 125 may use information provided by individual policyholders and/or obtained from policies, such as a policyholder's age, gender, marital status, occupation, credit score, income level, housing type (e.g., house versus apartment versus condominium), housing status (e.g., leased versus owned) or the like, to generate demographic data for a region. Additional information may include vehicle information associated with insurance policies, such as the number, type, make, model, year, etc. of vehicles on a policy. Using information from insurance policies within a geographic region, demographic data server system 125 may calculate various statistics for the geographic region, such as the mean, median, and mode for various demographic variables. In these examples, the use and/or distribution of personally identifiable information may be restricted to the systems and processes managed and/or controlled by the entity to which such information was provided from an individual absent explicit authorization from an individual to share such information as provided by applicable privacy laws and/or regulations. As described further herein, demographic data may include information about vehicle ownership rates, modes of transportation used for commuting, income levels, population density, housing density, building density, or the like. Such demographic data may be grouped by geographic areas or regions ranging in size from census block groups to cities, states, and countries.

Demographic data may include information that can be used to derive various dynamic properties or attributes associated with road networks, roadways, and/or individual physical road segments within a geographic area. As described in relation to road segments, dynamic attributes may identify characteristics of a road segment, and/or its surrounding area, that are variable and can change over time. Examples of dynamic attributes include traffic flow, such as vehicle speed and traffic volume; road conditions, such as surface conditions and road damage; weather conditions, including temperature, precipitation, and visibility; and traffic incidents, such as accidents, road closures, and congestion. Additional dynamic attributes include updates on construction zones and maintenance activities, information on special events affecting traffic patterns, real-time adjustments to traffic signal timings, updates on temporary signage, and emergency situations such as natural disasters and evacuation routes. Environmental conditions, such as air quality and noise levels, also constitute dynamic attributes. These attributes are crucial for applications such as real-time navigation, traffic management systems, autonomous vehicle operations, and emergency response planning, providing up-to-date information that helps drivers make informed decisions and improve overall road safety and efficiency.

In the context of demographic data, dynamic attributes for a road segment may provide insights into the changing characteristics and behaviors of the population in the area around the road segment. Examples include population density variations, such as the difference between daytime and nighttime populations due to commuters, workers, and residents. Economic activity fluctuations, like retail and commercial traffic patterns, can vary by time of day or season, while employment patterns influence traffic volumes during business hours or peak commuting times. Public transportation use, including transit ridership and bicycle and pedestrian traffic, can change based on factors like weather, time of day, or local events. School and education activities, such as school zone traffic during opening and closing times and traffic changes during school events, also impact road segments.

Housing and residential patterns, including new housing developments and shifts in rental versus ownership rates, affect long-term traffic patterns. Health and emergency services, such as variations in emergency vehicle trips due to age distribution or health conditions, and increased traffic near healthcare facilities during health crises, are also dynamic attributes. Crime and safety-related factors, including fluctuations in crime rates and increased police patrols, impact traffic dynamics.

Cultural and recreational activities, such as changes in traffic near parks, recreational areas, libraries, and community centers, are influenced by weather, time of year, or scheduled events. Socioeconomic shifts, like changes in income and spending patterns, affect traffic to retail and dining establishments, while overall population growth or decline impacts long-term traffic trends. These dynamic attributes help in understanding how demographic changes influence the real-time and evolving conditions of, and risks associated with, road segments, aiding in more effective traffic management, urban planning, and public safety strategies.

Crash-risk modeling server system 110 and/or map data server system 120 may connect to traffic data system 130 to receive information related to aggregate traffic data for one or more geographic areas. Traffic data system 130 may be a server system, such as a cloud-based server system, connected through network 135 and capable of running one or more processes related to collecting, generating, and/or providing traffic data. In some embodiments, traffic data system 130 collects traffic data from and/or includes one or more commercially and/or publicly available services. For example, traffic data system 130 may include one or more publicly accessible systems provided by one or more governmental agencies responsible for monitoring and/or collecting data related to traffic patterns, accidents, traffic volumes, and the like, as further described herein. As another example, traffic data system 130 may request and/or compile traffic data from one or more commercially and/or publicly available services. Additionally, or alternatively, traffic data system 130 may derive traffic data from other types of data, such as vehicle telematics data, insurance claim data, police reports, and the like.

Network 135 can include one or more wireless networks, wired networks, public networks, private networks, and/or mesh networks. For example, network 135 can include one or more local area networks (LANs) connected to one or more wide area networks (WANs), such as the Internet. Additionally, or alternatively, network 135 may include one or more cellular and/or satellite-based communications networks.

Crash-risk modeling server system 110, map data server system 120, and/or traffic data system 130 may receive driving data via network 135 attributable to movement of one or more vehicles. Driving data may be derived from sensor data measurements collected from telematics devices, including but not limited to sensor-equipped smartphones, Internet of Things (IoT) devices such as DriveWell Tags^{®} and on-board diagnostics (OBD) II devices, and data from connected vehicles with embedded telematics capabilities. For example, driving data for a particular vehicle, such as vehicle 160, may be collected and/or transmitted by the vehicle itself, and/or one or more devices disposed within the vehicle. For example, mobile device 140 and/or telematics device 150 disposed within vehicle 160 during a drive may collect driving data attributable to the movement and/or operation of vehicle 160 during the drive.

Crash-risk modeling server system 110, map data server system 120, and/or traffic data system 130 may receive driving data attributable to various types of vehicles. For example, vehicle 160 may be a consumer passenger vehicle, such as a sedan, minivan, pickup truck, and the like. As another example, vehicle 160 may be a commercial vehicle, such as a van, bus, semi-tractor, and the like. In some embodiments, vehicle 160 includes one or more components that collect and process data associated with vehicle operation. For example, vehicle 160 may include a Global Positioning System (GPS) receiver, an engine control unit (ECU), transmission control unit (TCU), inertial measurement unit (IMU), collision avoidance and warning systems, radar subsystems, and the like. Additionally, or alternatively, vehicle 160 may include one or more components that transmit and receive the data associated with vehicle operation via one or more communication protocols, such as Wi-Fi, Bluetooth^{®}, cellular communications, and the like.

Mobile device 140 may be a smartphone, tablet computer, laptop computer, gaming device, or some other form of computerized device that can collect, process, transmit, and receive one or more types of data, such as motion, location, and/or driving data. Telematics device 150 may be a special purpose computer that can be permanently or semi-permanently installed within and/or communicatively connected to a vehicle, such as vehicle 160. For example, telematics device 150 may be fixed to an interior surface of a vehicle, such as a windshield, engine compartment, and the like. Additionally, or alternatively, telematics device 150 may be coupled to a data port, such as an OBD port and/or universal serial bus (USB) port of a vehicle. Once fixed to the vehicle and/or connected with a data port, telematics device 150 may collect, process, transmit, and receive one or more types of data, such as motion, location, and/or driving data, as described further herein.

Mobile device 140, telematics device 150, and/or vehicle 160 may each include one or more processors configured collect and transmit data attributable to movement and/or operation of a vehicle. For example, mobile device 140, telematics device 150, and/or vehicle 160 may include one or more sensors, such as a Global Positioning System (GPS) receiver, one or more accelerometers, one or more gyroscopes, one or more compasses, one or more magnetometers, one or more barometers, and the like, that can be used to collect motion data attributable to a vehicle's movements and/or operations. Additionally, or alternatively, mobile device 140, telematics device 150, and/or vehicle 160 may collect and/or receive vehicle operating data, such as vehicle speed, compass headings, and the like, from one or more components of a vehicle, such as an ECU, TCU, and the like. Motion data and/or vehicle operating data collected while driving may be referred to as driving data.

In some embodiments, motion and/or driving data collected during a drive are analyzed to detect risk-related driving events. For example, based on acceleration and velocity data attributable to movements of a vehicle during a drive, one or more instances of speeding, hard braking, harsh acceleration, excessive speeding, hard cornering, and the like that occurred during the drive may be detected. As another example, based on motion data collected by a mobile device and/or one or more user inputs on the mobile device indicative of mobile device usage that tends to draw attention away from the road (e.g., texting, hand-held phone calls, hand-held phone motion, etc.), one or more instances of distracted driving may be detected. In yet another example, driving data may be used to identify the occurrence of a vehicle accident. The location and timing of risk-related driving events may be determined based on location data collected at or near in time to the data used to detect the risk-related driving events.

While described herein as instances of risky driving events, motion and/or driving data may be further analyzed to identify the absence of risky driving events and/or instances of safe driving events and patterns. For example, based on a rate of deceleration from an initial velocity to a complete stop, an instance of safe braking may be identified. As another example, the incidence of risky driving events, such as the number of hard brakes, may be compared to the overall number of driving events, such as the number of total braking events, to determine the frequency, rate, and/or probability of each braking event being a hard braking event.

When aggregated across drivers and vehicles, risk-related driving events can be used to characterize the geographical (e.g., street-level and/or road-segment-level) distribution of risky driving events. For example, based on driving data collected from multiple traversals of a particular road segment by one or more vehicles and/or drivers, the frequency and/or rate at which various risk-related driving events occur on the particular road segment may be determined. As described herein, such aggregate data for a physical road segment may be stored in association with a road segment and used to determine the extrinsic risk associated with the road segment. In some embodiments, the aggregated data is dynamically updated as additional driving data associated with subsequent traversals is received and/or otherwise becomes available. Due to the dependence on the aggregated risk data for each physical road segment, which may change over time, dynamic road segment attributes may include such aggregated risk data.

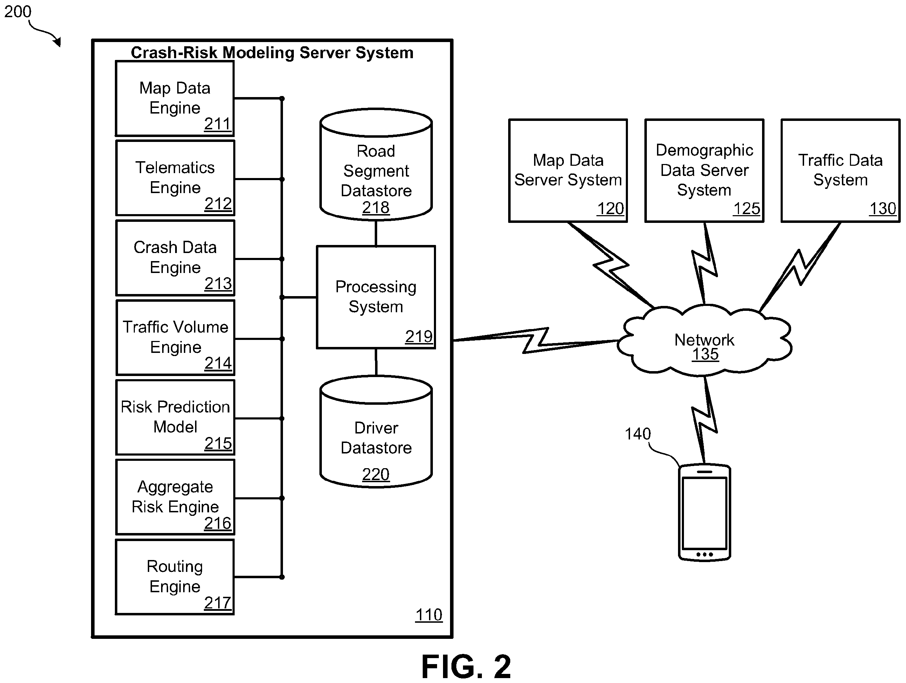

**FIG. 2** illustrates an embodiment of a system 200 for measuring extrinsic crash risk. System 200 can include: crash-risk modeling server system 110; map data server system 120; demographic data server system 125; traffic data system 130; network 135; and mobile device 140. As described herein, crash-risk modeling server system 110 may include a plurality of services configured to map physical road segments within a geographic area and predict crash risk at the street-level and/or road-segment-level. For example, and as illustrated, crash-risk modeling server system 110 may include: map data engine 211; telematics engine 212; crash data engine 213; traffic volume engine 214; risk prediction model 215; aggregate risk engine 216; and routing engine 217. As further illustrated, crash-risk modeling server system 110 can include one or more data stores and/or databases, such as road segment datastore 218 and driver datastore 220. Crash-risk modeling server system may further include processing system 219 that can coordinate the execution of the various functionalities provided by the plurality of services and can communicate with the one or more databases.

Map data engine 211 may request and/or receive digital map data for various geographic areas of interest from map data server system 120. As described above, digital map data may include data that can be used to determine the geometry of streets and/or road segments, the connectivity between streets and/or road segments, as well as their associated attributes. Based on the digital map data, map data engine 211 may identify each physical road segment within a geographic area represented in the digital map data for the geographic area. Each identified physical road segment may be converted into, and/or instantiated as, a segment data type or object for storage in a datastore, such as road segment datastore 218. Each identified segment may be stored in association with a segment identifier and one or more attributes. For example, each segment in the datastore may be associated with one or more static attributes and one or more dynamic attributes, as described above. Each segment may further be stored in association with a risk attribute, as further described herein.

Map data engine 211 may request and/or receive demographic data for various geographic areas of interest from demographic data server system 125. As described above, demographic data may include data that can be used to derive various dynamic properties or attributes associated with a road segment. For example, based on population density, housing density, and/or building density for a geographic area including a road segment, a determination can be made as to whether the road segment serves a residential, industrial, or rural area. As another example, based on vehicle ownership, population density, and/or housing density, a determination can be made as to the traffic volume of a road segment. Map data engine 211 may store demographic data for a geographic region or area as dynamic attributes associated with each road segment contained within the geographic region or area.

Map data engine 211 may identify or determine pairs of physical road segments that intersect in the geographic area based on the digital map data for the geographic area. As described further herein, intersecting road segment pairs may include two road segments associated with different streets or roadways that intersect (e.g., at a physical intersection), and/or two contiguous road segments on a same street or roadway (e.g., the first mile-long segment of a roadway and the second mile-long segment of the roadway). Based on the identified pairs of physical road segments that intersect, corresponding pairs of segments in the datastore may be identified, and a connection created between the segments in each pair. Each connection between segments may be created and/or instantiated as a connection data type or object for storage in a datastore, such as road segment datastore 218. Connections may be stored in association with a unique connection identifier. In some embodiments, the unique connection identifier is based on the segment identifiers for the two segments connected by the connection. Each connection may further be stored in association with one or more connectivity attributes, as described above.

In some embodiments, road segment datastore 218 enables efficient storage, retrieval, and manipulation of segments corresponding to physical road segments within a geographic area as well as the connections between segments that correspond to pairs of physical road segments that intersect within the geographic area. For example, road segment datastore 218 may be a graph database, relational database, NoSQL database, or a similar database structure suitable for representing a road segment network as a graph in which the nodes of the graph represent individual segments and the edges between nodes represent the connections between intersecting segments.

In some embodiments, map data engine 211 receives segment attributes and/or connectivity attributes from one or more of the other processes of crash-risk modeling server system. For example, map data engine 211 may receive risk attributes associated with individual road segments from risk prediction model 215. As another example, map data engine 211 may receive dynamic segment attributes from telematics engine 212, crash data engine 213, and/or traffic volume engine 214, as described further herein.

Telematics engine 212 may receive and process driving data attributable to one or more vehicles driving within a geographic area to generate risk-related driving attributes for individual road segments. For example, telematics engine 212 may receive driving data from mobile device 140 disposed in a vehicle during a drive. As described above, the driving data may include motion data collected by one or more sensors, such as an IMU, as well as the corresponding locations at which the motion data was collected during a trip or drive in a vehicle. Based on the location data, one or more road segments traversed during the drive may be identified along with the corresponding motion data collected while the vehicle traversed each road segment. Based on the motion data collected during a traversal of a road segment, one or more risk-related driving events can be detected as having occurred on each particular segment during the drive. A similar process may be performed for driving data associated with other trips in the same or other vehicles. For example, driving data may be collected over a period of time, such as one day, one week, one month, one year, or another suitable period of time selected to provide driving data for statistically significant number of drives. Driving data may also be collected for a number of drivers selected to provide a sample of drivers within a geographic area that is representative of the overall demographics of the geographic area.

As described above, risk-related driving events may include instances of speeding, hard braking, harsh acceleration, excessive speeding, hard cornering, and the like. Corresponding risk-related driving attributes for an individual traversal of a road segment (e.g., as determined from driving data obtained from a single traversal) may represent information related to each instance of a risk-related driving event, such as whether and to what extent a vehicle was speeding. Based on the aggregate data for each road segment, one or more traffic risk attributes may be determined and associated with each road segment (e.g., by map data engine 211).

Traffic risk attributes may represent the frequency, rate, and/or prevalence of risk-related driving events or attributes. For example, based on driving data collected over one-thousand traversals of a road segment, five hundred of the traversals may be identified as including an instance of hard-braking, meaning that drivers abruptly brake on the road segment approximately 50% of the time. Put differently, for each traversal of a road segment, there is a 50% chance that the driver will abruptly brake.

In addition to traffic risk attributes associated with a particular road segment, telematics engine 212 may aggregate and/or generate driver risk attributes associated with a particular driver or vehicle. For example, telematics engine 212 may associate risk-related driving events and attributes with a particular driver or vehicle after detecting them from driving data collected by a mobile device associated with the particular driver and/or a telematics device associated with the particular vehicle. Using risk-related driving events and/or attributes from multiple drives attributable to the particular driver or vehicle, driving risk attributes indicative of the frequency or rate at which a driver or vehicle performs a risk-related driving event may be determined for the driver and/or vehicle. For example, based on driving data collected during ten drives by a particular driver, of which the driver was speeding during five of the ten drives, it may be determined that the driver speeds at least once during 50% of the time when the driver is driving a vehicle.

Additionally, or alternatively, telematics engine 212 may use road segment traversals attributable to a particular driver and/or vehicle to identify common routes and/or road segments driven by the driver and/or the vehicle. For example, by identifying a sequence of segments that were traversed in driving data collected from multiple trips, it may be determined that the driver or vehicle commonly takes the route comprising the sequence of segments to and from work, school, the store, and the like. As further described herein, based on the common routes taken by a driver and/or vehicle, the frequency at which the routes are traversed, as well as the risk associated with each road segment within each route, a personalized risk score may be generated for each route as well as for the driver and/or vehicle.

Driver datastore 220 may store information related to individual drivers and/or vehicles. For example, driver datastore 220 may include records for each driver and/or vehicle insured by a particular insurance company. Driver datastore 220 may further include the driver risk attributes and/or common routes attributable to each driver and/or vehicle in the datastore. Additionally, or alternatively, driver datastore 220 may include records of past insurance claims, such as vehicle accident records.

Crash data engine 213 may receive data including locations of known vehicle crashes as truth data for use in training and/or updating a crash risk model, as described further herein. Such crash data may be requested and/or received from a variety of publicly accessible datasets, services, and/or systems, such as traffic data system 130. Additionally, or alternatively, crash data may be obtained from driver datastore 220. Crash data engine 213 may analyze the locations of known vehicle crashes to identify segments in road segment datastore 218 along which vehicle crashes have occurred. Crash data engine 213 may compile crash data for each segment into a number of total crashes that have occurred, the frequency at which crashes occur (e.g., once per day, once per week, etc.), and the like. Crash data engine 213 may also compile additional information from each of the crashes, such as the times of day at which the crashes occurred, the weather when the crashes occurred, and the like. Additionally, or alternatively, crash data engine 213 may categorize crashes according to their severity.

Traffic volume engine 214 may estimate the volume of traffic on each road segment within a geographic area. Based on the estimated traffic volume for a given road segment, a traffic volume attribute for a corresponding segment in road segment datastore 218 may be updated. Traffic volume may refer to the quantity of vehicles, such as cars, trucks, or other modes of transportation, which pass through or traverse a specific road segment within a given period of time, such as in vehicles per hour, vehicles per day, vehicles per year, and the like.

Traffic volume estimates may be obtained independently or inferred from collected data, such as driving data and/or demographic data. For example, traffic volume estimates may be obtained from external sources of traffic data, such as traffic data system 130. As another example, driving data may be used to derive street-level and/or segment-level traffic volume estimates. For example, as explained above, telematics engine 212 may use driving data collected during a drive to determine which segments were traversed. Further, telematics engine 212 may aggregate the number of traversals during a given period of time from driving data collected during that period of time to determine a first traffic volume estimate. Traffic volume engine 214 may then resample drives using car ownership, travel demand, population density, and/or other demographic data to simulate the overall traffic condition within a geographic area. One way in which this can be done is by benchmarking collected data (e.g., traversals identified from actual driving data) against the U.S. Federal Highway Administration's high-fidelity traffic sensor data to mitigate potential sampling biases of the programs that collected the driving data.

Traffic volume attributes may allow crash-risk modeling server system 110, and/or risk prediction model 215, to produce a measure of risk-per-traversal for any given road segment in addition to an aggregate risk associated with a given road segment. For example, the traffic volume attribute for a given segment may be applied as a weighting factor to the traffic risk attributes and/or crash data associated with the segment. To illustrate, consider two separate road segments where the first segment experiences one crash per week and has 100,000 traversals each week while the second segment experiences one crash every 100 weeks but only has 20,000 traversals during that time. Because the number of crashes that occur on the first segment over time is much greater than the number of crashes that occur on the second segment, the aggregate risk associated with the first segment is higher than for the second segment. However, when adjusted for traffic volume, it can be seen that the second segment has a much higher risk-per-traversal of a crash (i.e., approximately 1/20,000) compared to the first segment (i.e., approximately 1/100,000).

By providing a measure of risk-per-traversal, crash-risk modeling server system 110 can accurately capture the risk profiles of different road types, uncovering substantive extrinsic risk factors related to the physical and dynamic properties of the street beyond the general observation that higher-volume areas tend to have more crashes. Furthermore, when extrinsic risk factors are measured per segment per traversal, they can be used to develop extrinsic risk scoring models that adjust for individual drivers' exposure to driving risks based on their own driving patterns, yielding accurate localized and personalized risk scores at the trip level as well as at the driver level, as described further herein.

Risk prediction model 215 may be a data processing model that combines road network properties, such as static segment attributes and connectivity attributes, with dynamic segment attributes, such as telematics-derived traffic risk attributes and/or traffic volume estimates, to yield a measure of driving risk for any road segment. Put differently, risk prediction model 215 may use the segment attributes of a particular segment, the segment attributes of connected segments, as well as their respective connectivity attributes to estimate the crash rate or crash risk of the particular segment. As described herein, the crash rate or crash risk of a particular segment may represent an estimated likelihood that any traversal of the particular segment will result in a crash.

After generating a crash risk for a particular segment, risk prediction model 215 may update a risk attribute for the particular segment in road segment datastore 218. In some embodiments, the crash risk for a particular segment depends on the crash risk for adjacent, or connected, segments. Risk prediction model 215 may perform one or more iterations when determining and/or updating the risk attribute for segments within a geographic area. For example, during a first iteration, risk prediction model 215 may generate a first crash risk for a particular segment before generating crash risks for adjacent segments. During a second iteration, risk prediction model 215 may update the first crash risk for the particular segment based on the later generated crash risks for the adjacent segments.

Risk prediction model 215 may use a Graph Neural Network (GNN) to predict crash risk for segments in the road segment datastore 218. The GNN may be a neural network designed to process road segment data structured as a graph, such as in road segment datastore 218. The GNN may leverage the graph structure of road segment datastore 218 to capture information from neighboring segments and connections when predicting crash risk for a particular segment. Compared to other types of machine learning models and neural networks, the GNN may allow risk prediction model 215 to consider not only the attributes of a segment when predicting the crash risk for the segment, but also the attributes for connected segments and the attributes for the connections between them.

Risk prediction model 215 may be trained using truth data, such as the crash data compiled by crash data engine 213. Based on the truth data representing locations where actual crashes have occurred, risk prediction model 215 and/or the GNN may be trained to yield estimates that are maximally consistent with the available truth data. For example, the GNN can be trained to minimize the value of an appropriate loss function with respect to the model's internal parameters. In some embodiments, the loss function is chosen according to a particular underlying statistical model. For example, it may be assumed that the number of crashes observed along a given road segment is a realization of a Poisson random variable that has an underlying rate given by the expected number of crashes. The GNN may then be built using the Poisson loss function, or another suitable loss function, derived from such a statistical model in order to yield estimates of the underlying rate parameters for all road segments in a manner that is consistent with the observed crash counts and the local risk-related features of the road network.

Training risk prediction model 215 in this way may enable it to learn where crashes have occurred and also learn to recognize the factors that contribute to crash risk for any given location. Once trained, the knowledge encoded in risk prediction model 215 can be applied to new geographic areas with or without historical crash data being available for them. Put differently, once risk prediction model 215 has been trained to predict crash risk for segments within a first geographic area based on truth data obtained for the first geographic area, risk prediction model 215 can predict crash risk for segments in second geographic area for which crash data is unavailable based on static and dynamic attributes associated with the segments in the second geographic area as well as the connectivity attributes for the connections between intersecting segments. For example, risk prediction model 215 can be trained in one part of a state or country and run in other parts of the state or country. As another example, risk prediction model 215 can be used later in time as additional driving data is collected and static or dynamic segment attributes are updated.

In yet another example, risk prediction model 215 can be used to predict crash risk for hypothetical road networks. Hypothetical road networks may include real-world road segments for which the static and/or dynamic attributes of one or more road segments, and/or the connectivity attributes between road segments, have been modified. Additionally, or alternatively, hypothetical road networks may include the designs for new road networks. Crash risk predictions for road segments in a hypothetical road network may be used for city planning, development, maintenance, and/or construction. For example, before actually modifying a road segment, such as by adding/removing lanes, introducing a new intersection, replacing a stop sign with a stop light or yield sign, increasing/decreasing the speed limit for the road segment, or the like, the attributes of the road segment(s) in a model of the road network can be modified according to the intended changes. Once modified, risk prediction model 215 can be executed on the intended model to generate a new crash risk for the road segment. The new crash risk may then be compared with the existing crash risk for the road segment and/or crash risks generated for other modifications of the road segment, to identify the attributes of the road segment that will result in the lowest crash risk. These attributes may then be translated into the physical, or logical, changes to the actual road segment.

Aggregate risk engine 216 may process the crash risks generated by risk prediction model 215 to generate aggregate risk assessments. Compared to the crash risk associated with any given traversal of a segment, aggregate risk assessments may represent the overall crash risk exposure attributable to a geographic area, a particular driver, or a particular vehicle. For example, one or more statistical methods can be applied to each crash risk generated for a segment within geographic area to determine the aggregate risk associated with any single driving event through or within the geographic area.

For individual drivers and/or vehicles, aggregate risk engine 216 may generate a driver or vehicle risk rating. For example, based on the common routes driven by a particular driver or vehicle (e.g., as determined by telematics engine 212), the frequency at which the routes are driven, and the risk attributes associated with each of the segments included in each route, a risk rating for the particular driver or vehicle can be determined. As another example, the risk rating for the particular driver can be determined based on commonly visited locations (e.g., a residence, work, school, market, etc.), the frequency at which the locations are visited, and the risk attributes associated with heavily traveled segments between the locations and/or along heavily traveled segments within some distance of the locations.

As described herein, driver and/or vehicle risk ratings may represent the extrinsic risk that a particular driver or vehicle is exposed to as determined from factors external to the driver or vehicle. On the other hand, factors or attributes specific to a driver (e.g., risk-related attributes) or to a vehicle (e.g., the safety features and/or systems of a particular vehicle) may be used to determine an intrinsic risk posed by the driver and/or vehicle on the driver and/or vehicle. Extrinsic driver risk and intrinsic driver risk may both be separately valuable for estimating an individual's risk of being involved in a vehicle crash. However, by combining extrinsic driver risk with intrinsic driver risk, a more accurate reflection of an individual driver's risk may be determined.

Routing engine 217 may identify routes between starting and ending locations within or through a geographic area that meet one or more criteria. For example, routing engine 217 may identify routes, or sequences of segments, which represent the safest possible routes between locations compared to other possible routes. As examples, routing engine 217 may identify routes that are less trafficked, shorter in distance or time of traversal, and the like.

Routing engine 217 may apply one or more algorithms, such as a least cost algorithm, to the segments in road segment datastore 218, to identify a sequence of segments between the starting location and ending location that has the lowest cost compared to other sequences of segments between the starting location and ending location. The cost associated with a sequence of segments between the starting location and ending location may be a compilation of one or more cost values associated with each segment in the sequence. For example, the cost of a sequence having four segments may be the summation of the cost values of each of the four segments. In some embodiments, each segment is associated with one or more types of cost values, such as a risk value derived from the segment's risk attribute, a congestion value derived from the segment's traffic volume attribute, a traversal time value, a distance value, and the like.

Compiling the cost values for a sequence of segments may include generating a summation of each type of cost value. Each type of cost value may in turn be weighted based on predefined criteria for which the identified route is expected to meet. For example, the predefined criteria may specify that the identified route must be the safest possible route. As such, cost values derived from the risk attributes in the sequence of segments may be weighted higher than cost values derived from length attributes in order to reflect the higher importance on minimizing crash risk along the route compared to the relatively low importance of minimizing travel distance.

Additional or alternative methods of balancing criteria for an identified route may be used. For example, given a shortest distance route and/or shortest time route between two points, routing engine 217 may identify safer alternatives that are within a threshold deviation from the shortest distance or shortest time. The threshold deviation may be a discrete value, such as 5 minutes or 5 miles. For example, compared to the shortest route that is 5 miles long, routing engine 217 may identify the next safest route that is no longer than 10 miles long. Additionally, or alternatively, the threshold deviation may be a function of the shortest distance or shortest time, such as a percentage function. For example, routing engine 217 may identify the next safest route that is no more than five percent longer in duration or distance than the shortest duration or distance route. While the shortest distance and/or duration are used as the basis from which deviations are made, other route attributes may instead form the basis from which deviations are made. For example, compared to the safest route, routing engine 217 may identify the shortest route that has a risk within a threshold deviation of the risk associated with the safest route.

Routing engine 217 may identify safe routes between starting and ending locations in response to one or more types of requests. For example, after identifying common starting and ending locations visited by a particular driver, telematics engine 212 may request a safer or the safest route between each starting and ending location. Telematics engine 212 and/or routing engine 217 may then compare the safest route identified by routing engine 217 with a route commonly traveled by the driver to determine if the driver is taking the safest route. Telematics engine 212 and/or routing engine 217 may then provide the safest route to the driver as a suggestion to minimize their risk of being involved in a vehicle accident. For example, crash-risk modeling server system 110 may transmit an SMS message, email, push notification or the like, to the driver using the driver's communication details stored in driver datastore 220.

As another example, routing engine 217 may receive navigation requests from a driver. For example, a driver may submit a navigation request via a navigation application executing on a mobile device, such as mobile device 140. The navigation request may include a starting location and an ending location for an upcoming trip being planned by the driver. The navigation request may further include one or more preferences for identifying the sequence of segments between the starting and ending locations, such as an indication of the relative importance of each type of cost value to the driver. For example, the driver may indicate that they would like to follow the safest route regardless of how long it will take. As another example, the driver may indicate that balances distance with risk exposure. In response to a navigation request, routing engine 217 may identify one or more routes between the starting and ending locations and provide them to the driver. For example, routing engine 217 may provide a shortest distance/time route and a safer route as options for the driver to select between.

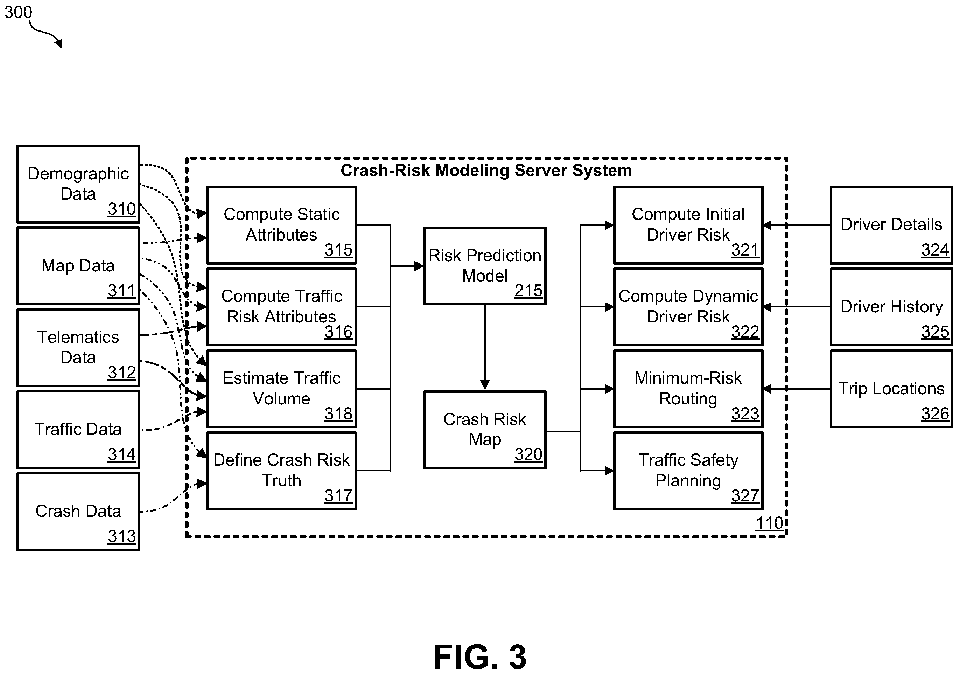

**FIG. 3** is a simplified flow diagram 300 illustrating exemplary crash-risk modeling according to aspects of the present disclosure. As described above, crash-risk modeling may involve one or more processes related to mapping road segments within a geographic area and predicting crash risk at the road-segment-level to generate a crash risk map 320 for the geographic area. As illustrated, one or more components of crash-risk modeling server system 110, such as risk prediction model 215, may be used to model crash risk and generate crash risk map 320. As further illustrated, crash-risk modeling server system 110 may use one or more types of data from one or more sources as inputs to generate crash risk map 320, such as: demographic data 310 (e.g., from demographic data server system 125);map data 311 (e.g., from map data server system 120); telematics data 312 (e.g., collected by mobile device 140); crash data 313 (e.g., from traffic data system 130); and traffic data 314 (e.g., from traffic data system 130).

Crash-risk modeling server system 110 may perform one or more pre-processing actions on one or more combinations of the data it receives prior to generating crash risk map 320 with risk prediction model 215. For example, as described above in relation to map data engine 211, crash-risk modeling server system 110 may use demographic data 310 and/or map data 311 as input to compute static attributes 315 for segments that correspond to physical road segments and connections that correspond to intersections between pairs of physical road segments. As described above in relation to telematics engine 212, crash-risk modeling server system 110 may use demographic data 310, map data 311, and/or the segments derived from map data 311, along with telematics data 312 as inputs to compute traffic risk attributes 316 for each segment.

As described above in relation to crash data engine 213, crash-risk modeling server system 110 may use map data 311, and/or the segments derived from map data 311, along with crash data 313 as inputs to define crash risk truth 317 for each segment. As described above in relation to traffic volume engine 214, crash-risk modeling server system 110 may use demographic data 310, map data 311, and/or the segments derived from map data 311, along with telematics data 312 and crash data 313 as inputs to estimate traffic volume 318 for each segment.

As described above in relation to road segment datastore 218, crash risk map 320 may include a collection of segments corresponding to physical road segments in a geographic area. Crash risk map 320 may also include connections between pairs of road segments corresponding to pairs of physical road segments that intersect with each other. In some embodiments, the segments and connections in crash risk map 320 are represented in a road segment datastore, such as road segment datastore 218, using a graph data structure. As further described above, risk prediction model 215 may be used to generate and/or update each segment in crash risk map 320 with a risk attribute representing the aggregate extrinsic risk associated with the segment and/or the extrinsic risk associated with each individual traversal of the segment.

As further illustrated, crash-risk modeling server system 110 may use crash risk map 320 for one or more applications. For example, and as described above in relation to aggregate risk engine 216, based on driver details 324, such as the locations of a particular driver's home, workplace, school, and/or other commonly visited locations, crash-risk modeling server system 110 may use crash risk map 320 to compute initial driver risk 321 for the particular driver. Based on driver history 325, such as the routes driven by a particular driver, crash-risk modeling server system 110 may use crash risk map 320 to compute dynamic driver risk 322 for the particular driver, as further described above in relation to aggregate risk engine 216. Based on trip locations 326, such as a starting and ending location of a trip (e.g., that occurred in the past or may occur in the future), crash-risk modeling server system 110 may use crash risk map 320 for minimum-risk routing 323, as described above in relation to routing engine 217.

Additional applications for crash-risk modeling server system 110 may include traffic safety planning 327 based on hypothetical crash risk maps. By modifying static segment attributes and/or connectivity attributes associated with existing segments and/or connections in crash risk map 320, risk prediction model 215 can generate a hypothetical crash risk map. The hypothetical crash risk map may model the expected crash risk associated with modifying a physical road segment or intersection. This could allow city planners, civil engineers, transportation engineers, and the like to evaluate the likely effects of making proposed changes to a physical road segment or intersection, such as increasing or decreasing a posted speed limit, replacing a yield sign with a stop sign, replacing a stop sign with a traffic signal, reducing the number of lanes, moving the location of merges, and the like.

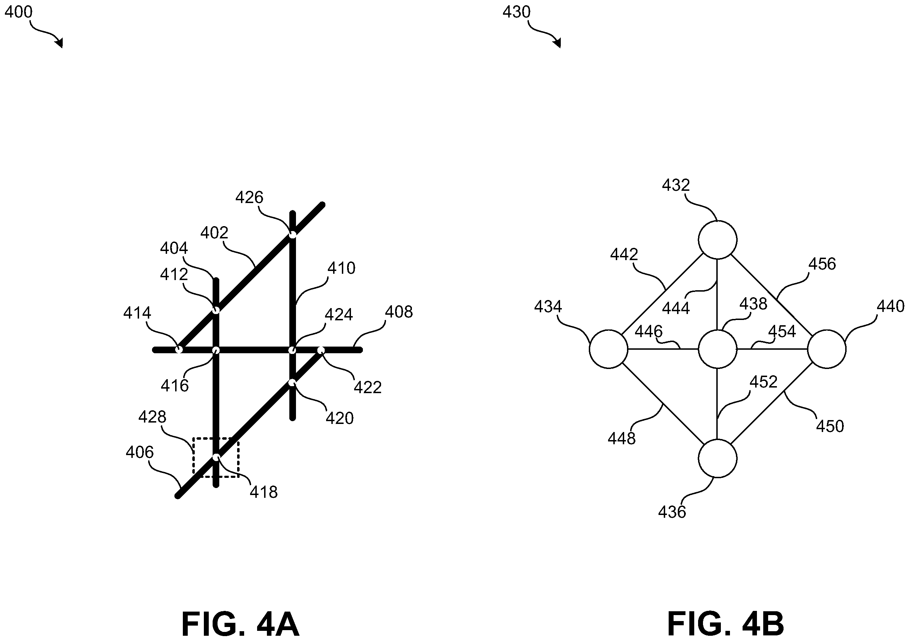

**FIGS. 4A and 4B** illustrate exemplary representations of road segments in a geographic area according to aspects of the present disclosure. Specifically, FIG. 4A illustrates a road map 400 of physical road segments in a geographic area. As illustrated, the geographic area may include first road 402, second road 404, third road 406, fourth road 408, and fifth road 410. As further illustrated, first road 402 intersects with: second road 404 at first intersection 412; fourth road 408 at second intersection 414; and fifth road 410 at third intersection 426. Second road 404 also intersects with: fourth road 408 at fourth intersection 416; and third road 406 at fifth intersection 418. Third road 406 also intersects with: fifth road 410 at sixth intersection 420 and fourth road 408 at seventh intersection 422. Lastly, fifth road 410 also intersects with fourth road 408 at eighth intersection 424.

As described above in relation to map data engine 211 and map data 311, the physical roads and intersections within the geographic area represented by road map 400 may be identified from digital map data, along with their associated static attributes and connectivity attributes and stored in a datastore, such as road segment datastore 218. FIG. 4B illustrates a graph 430 of the roads and intersections represented by road map 400. As illustrated, each physical road represented in road map 400 corresponds to a node in graph 430. Specifically, first road 402 corresponds to first node 432, second road 404 corresponds to second node 434, third road 406 corresponds to third node 436, fourth road 408 corresponds to fourth node 438, and fifth road 410 corresponds to fifth node 440.

As further illustrated, each physical intersection between pairs of physical roads in road map 400 corresponds to a connection or edge in graph 430. Specifically, first intersection 412 corresponds to first connection 442, second intersection 414 corresponds to second connection 444, third intersection 426 corresponds to third connection 456, fourth intersection 416 corresponds to fourth connection 446, fifth intersection 418 corresponds to fifth connection 448, sixth intersection 420 corresponds to sixth connection 450, seventh intersection 422 corresponds to seventh connection 452, and eighth intersection 424 corresponds to eighth connection 454.

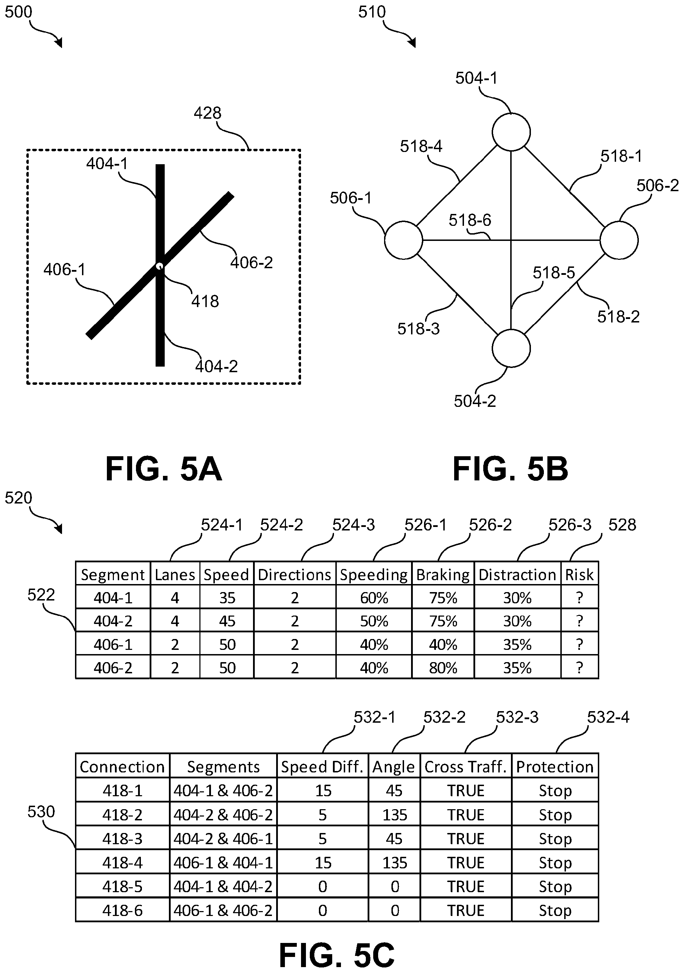

**FIGS. 5A** - **5C** illustrate additional exemplary representations of road segments in a geographic area according to aspects of the present disclosure. Specifically, FIG. 5A illustrates road map 500, including a representation of a subset 428 of the geographic area represented by road map 400 of FIG. 4A. Subset 428 includes fifth intersection 418 between second road 404 and third road 406. In some embodiments, physical roads in a geographic area comprise multiple physical road segments. For example, and as illustrated in FIG. 5A, second road 404 may include first road segment 404-1 and second road segment 404-2 while third road 406 may include third road segment 406-1 and fourth road segment 406-2. Physical roads within a geographic area may be divided into road segments based on a standard road segment distance, such as every quarter-mile, half-mile, mile, or other suitable distance. Additionally, or alternatively, roads may be divided into road segments that represent portions of the road between consecutive intersections along the road. For example, referring back to FIG. 4A, fourth road 408 could be separated at each intersection into five road segments.

In a similar manner as described above in relation to FIGS. 4A and 4B, the physical road segments illustrated in FIG. 5A can be represented as a graph. FIG. 5B illustrates a graph 510 of the physical road segments represented by road map 500. As illustrated, each physical road segment represented in road map 500 corresponds to a segment node in graph 510. Specifically, first road segment 404-1 corresponds to first segment node 504-1, second road segment 404-2 corresponds to second segment node 504-2, third road segment 406-1 corresponds to third segment node 506-1, and fourth road segment 406-2 corresponds to fourth segment node 506-2.

In some embodiments, each unique pair of physical road segments that intersect at a physical intersection between two or more roads is represented by a single connection in a datastore. For example, each segment node represented in graph 510 may be connected by a single edge or connection. Additionally, or alternatively, each unique pair of physical road segments that intersect at a physical intersection between two or more roads may be represented by a unique connection in the datastore. For example, by comparison with FIGS. 4A and 4B, wherein each physical intersection was represented as a single connection in graph 430, by dividing each road into road segments at each physical intersection, physical intersections between two or more roads, such as fifth intersection 418 between second road 404 and third road 406, may be represented by multiple connections in graph 510. In particular, and as illustrated, fifth intersection 418 may correspond to first connection 518-1, second connection 518-2, third connection 518-3, fourth connection 518-4, fifth connection 518-5, and sixth connection 518-6.

While not illustrated in FIG. 5B, each segment node may have one or more attributes associated with it, and each connection may have one or more connectivity attributes associated with it, as further described above in relation to map data engine 211. FIG. 5C illustrates tables 520 of road map 500 and graph 510. As described above, while road networks within a geographic area can be represented in a graph data structure, additional or alternative data structures, such as relational databases, may be used to model crash risk at the street-level and/or road-segment-level.

As illustrated, tables 520 may include segments 522 and connections 530. Segments 522 may include a row, entry, and/or instance for each road segment within a geographic area. Each row, entry, and/or instance in segments 522 may have a unique segment identifier and include one or more segment attributes, such as static segment attributes, dynamic segment attributes, and risk attribute 528. As described above in relation to map data engine 211, static segment attributes may include a number of lanes attribute 524-1, a speed limit attribute 524-2, a number of directions attribute 524-3, and other similarly suitable static segment attributes representing various characteristics or properties associated with a physical road segment that are independent of driver or traffic related data. As further described above in relation to telematics engine 212 and traffic volume engine 214, dynamic segment attributes may include a speeding rate attribute 526-1, a hard braking rate attribute 526-2, a distracted driving rate attribute 526-3, and other similarly suitable dynamic segment attributes representing characteristics or properties of the traffic that occurs on a road segment.

Connections 530 may include a row, entry, and/or instance for each pair of segments in segments 522 that correspond to a pair of physical road segments that intersect. Each row, entry, and/or instance in connections 530 may have a unique connection identifier and include one or more connectivity attributes, such as a speed limit differential attribute 532-1, an intersection angle attribute 532-2, a cross traffic attribute 532-3, and a cross traffic protection attribute 532-4.

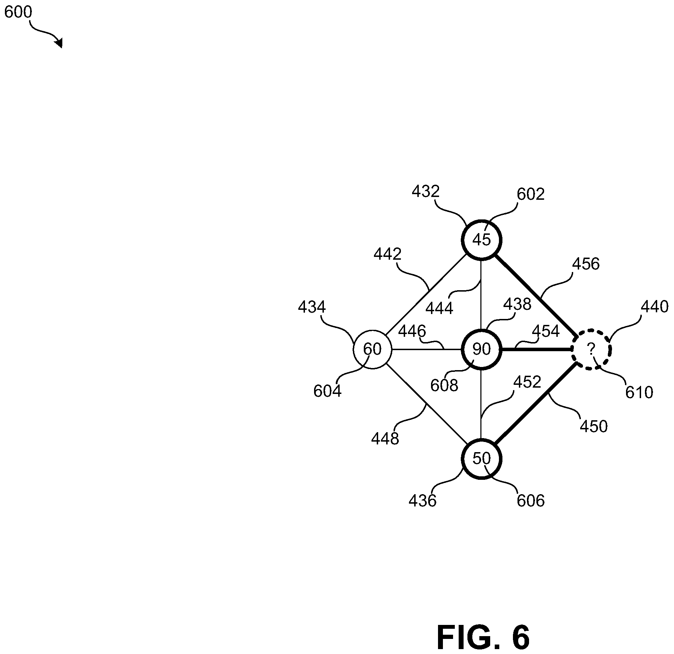

**FIG. 6** illustrates an exemplary representation 600 of road segment risk modeling using the nodes and connections illustrated in graph 430 from FIG. 4B. As described above in relation to FIG. 2, a risk prediction model, such as risk prediction model 215, may determine or classify the extrinsic crash risk associated with each road segment in a geographic area. For example, and as illustrated in FIG. 6, first node 432 has a first crash risk 602 of "45", second node 434 has a second crash risk 604 of "60", third node 436 has a third crash risk 606 of "50", and fourth node 438 has a fourth crash risk 608 of "90". As further illustrated, a risk prediction model may be in the process of determining a fifth crash risk 610 for fifth node 440.

As further described above, the risk prediction model may determine crash risk for a segment using a GNN that considers the segment's attributes, the attributes for connected segments, and the connectivity attributes for each connection between the segment and a connected segment. To illustrate, fifth crash risk 610 for fifth node 440 may be based on the segment attributes for: fifth node 440, first node 432, third node 436, and fourth node 438, as well as the connectivity attributes for third connection 456, eighth connection 454, and sixth connection 450.

As further described above, determining and/or updating crash risk for each segment may involve multiple iterations. For example, third crash risk 606 may be dependent on fifth crash risk 610 due to sixth connection 450 between third node 436 and fifth node 440. If fifth crash risk 610 is not determined by the time third crash risk 606 is initially determined during a first iteration of the risk prediction model, third crash risk 606 may be updated during a subsequent iteration of the risk prediction model based on the newly determined fifth crash risk 610. In some embodiments, the number of iterations may be predefined based on statistical modeling. Additionally, or alternatively, the number of iterations may continue until one or more predefined criteria are met. For example, iterations may continue until it is determined that a last iteration did not result in any crash risks being updated from the results of a previous iteration and/or that the output of a loss function is less than or equal to a predefined loss threshold.

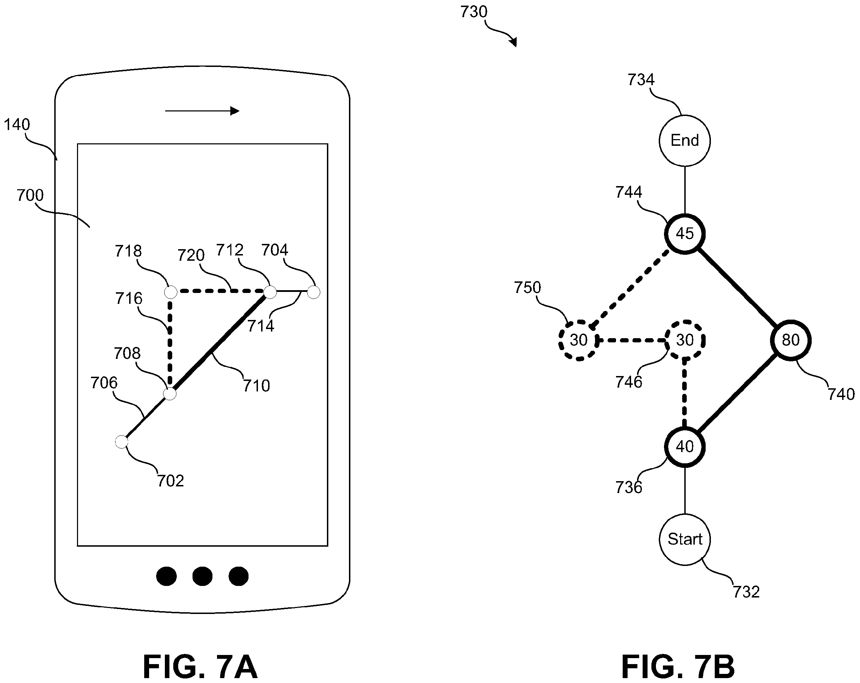

**FIGS. 7A and 7B** illustrate exemplary representations of risk-based trip routing according to aspects of the present disclosure. Specifically, FIG. 7A illustrates an example graphical user interface (GUI) 700 presented on mobile device 140 by a navigation application executing on mobile device 140. As described above in relation to routing engine 217, crash risk maps representing the extrinsic crash risk associated with each road segment in a geographic area may be used to identify safest and/or safer routes between two locations. For example, in response to receiving a request from mobile device 140 including starting location 702 and ending location 704, a routing engine, such as routing engine 217 described above, may identify one or more sequences of segments as possible routes between starting location 702 and ending location 704.

One possible route may include: first road segment 706 between starting location 702 and first intersection 708; second road segment 710 between first intersection 708 and second intersection 712; and third road segment 714 between second intersection 712 and ending location 704. Another possible route may include: first road segment 706; fourth road segment 716 between first intersection 708 and third intersection 718; fifth road segment 720 between third intersection 718 and second intersection 712; and third road segment 714. As illustrated, the first route including second road segment 710 may be the shorter of the two routes, but the second route including fourth road segment 716 and fifth road segment 720 may be safer.

FIG. 7B illustrates a graph 730 representing the road segments and intersections displayed in GLTI 700 of FIG. 7A. As illustrated, starting location 702 corresponds to start node 732, first road segment 706 corresponds to first segment node 736, second road segment 710 corresponds to second segment node 740, third road segment 714 corresponds to third segment node 744, fourth road segment 716 corresponds to fourth segment node 746, fifth road segment 720 corresponds to fifth segment node 750, and ending location 704 corresponds to end node 734.

As further described in relation to routing engine 217, one or more least cost algorithms may be applied to cost values associated with each segment to identify the safest route between two locations. In some embodiments, the total crash risk associated with a possible route between two locations may be determined by aggregating, compiling, or adding (e.g., in the case of numerical risk attributes) the crash risk associated with each segment in the route. The total crash risk associated with each possible route may then be compared to identify the route with the lowest total crash risk.

For example, a total crash risk associated with the first route between starting location 702 and ending location 704 may be determined by adding the crash risk for first segment node 736 of "40", the crash risk for the second segment node 740 of "80", and the crash risk for the third segment node 744 of "45" to arrive at a total crash risk of "165". Similarly, the total crash risk associated with the second route may be determined by adding the crash risk for first segment node 736, the crash risk for fourth segment node 746 of "30", the crash risk for fifth segment node 750 of "30", and the crash risk for third segment node 744 to arrive at a total crash risk of "145". Thus, while the first route may involve fewer road segments and be the shorter route, the second route may be identified as the safer route between the two because its total crash risk is less than the total crash risk for the first route.

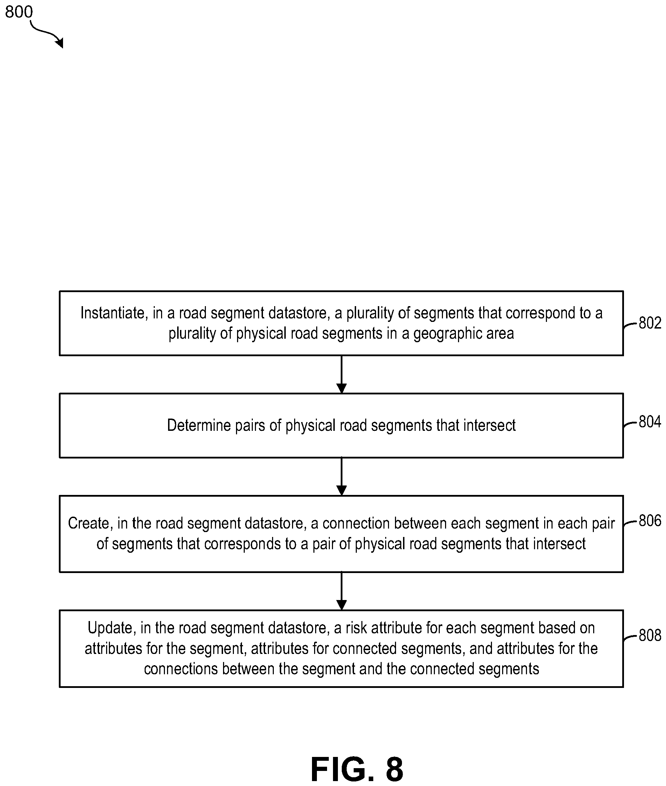

**FIG. 8** illustrates an example of a method 800 of mapping driving risk in a geographic area according to aspects of the present disclosure. One or more blocks of method 800 may be performed by a server system, such as crash-risk modeling server system 110 described above. Additionally, or alternatively, one or more blocks of method 800 may use and/or process data from one or more mobile devices, such as mobile device 140, telematics device 150, and/or vehicle 160, as well as one or more external systems and/or services, such as map data server system 120 and/or traffic data system 130.

At block 802, a plurality of segments that correspond to a plurality of physical road segments in a geographic area are instantiated in a road segment datastore. The plurality of segments may be identified and/or derived from digital map data for the geographic area. Each segment of the plurality of segments may be instantiated as a node object in a graph data structure or other similar data structure capable of storing connections between node objects. Each segment, or node object, in the road segment datastore may include a plurality of segment attributes, such as: a crash risk attribute; static attributes derived from digital map data for the corresponding physical road segment; and/or dynamic attributes, such as traffic risk attributes and a traffic volume attribute.

The crash risk attribute for each segment may represent an expected crash rate per traversal of the segment. Put differently, for any given traversal of a segment by a vehicle, the crash risk attribute may represent the likelihood that the vehicle will be involved in an accident. In some embodiments, the crash risk attribute represents the extrinsic risk of traversing a particular segment based on extrinsic risk factors associated with the particular segment. For example, the extrinsic risk factors may include local properties of the road network, such as blind spots or intersections that often cause abrupt braking, as well as localized tendencies of other drivers to engage in risky driving activities, such as driving while texting or excessive speeding, which elevate the risk levels of anyone else sharing the road.

The extrinsic risk factors associated with a particular physical road segment can be represented by the static segment attributes and dynamic segment attributes of a segment in the road segment datastore. For example, the static segment attributes may include one or more of a segment curvature attribute, a number of lanes attribute, a speed limit attribute, a directionality attribute, a traffic median attribute, a ramp attribute, a lane marker attribute, traffic control signage attributes, a bicycle lane attribute, a pedestrian crossing attribute, and/or a streetlight attribute. Dynamic segment attributes may include a traffic volume attribute and traffic risk attributes.

In some embodiments, method 800 includes one or more additional blocks associated with identifying and/or deriving the static and/or dynamic attributes associated with each segment instantiated in the road segment datastore. For example, before, during, or after a segment is instantiated, digital map data for the corresponding physical road segment may be analyzed to identify one or more of the static attributes associated with the segment.

Additionally, or alternatively, method 800 may include blocks for deriving the dynamic attributes for each segment. For example, method 800 may include a block where sensor data collected by a telematics device disposed in a vehicle (e.g., mobile device 140, telematics device 150, and/or vehicle 160) during a traversal of a physical road segment of the plurality of physical road segments is received for each traversal of a plurality of traversals of the physical road segment. Method 800 may further include a block where the traffic volume attribute for a segment is updated based on the sensor data received for each traversal of the plurality of traversals. For example, as described above in relation to traffic volume engine 214, the number of traversals in the plurality of traversals may form the basis of an estimate of the volume of traffic that traverses the corresponding physical road segment.

Additionally, or alternatively, method 800 may include one or more blocks wherein risk-related driving attributes are detected from the sensor data for each respective traversal of the plurality of traversals. As described above in relation to telematics engine 212, risk-related driving attributes may include one or more of a speeding attribute, a hard braking attribute, a hard acceleration attribute, a hard cornering attribute, a distracted driving attribute, and other similar attributes reflecting the occurrence of unsafe driving activities. From the risk-related driving attributes derived for each respective traversal of a segment, a frequency or rate at which each risk-related driving attribute is detected in the plurality of traversals of the segment may be determined and/or represented by corresponding traffic risk attributes. Based on the traffic volume estimate, the traffic risk attributes may be weighted or otherwise adjusted to represent the likelihood of a traffic risk attribute occurring during any given traversal.

At block 804, pairs of physical road segments that intersect are determined. Each pair of physical road segments that intersect has a corresponding pair of segments in the road segment datastore and each segment of the plurality of segments may be included in at least one pair of segments. In some embodiments, the pairs of physical road segments that intersect are determined from digital map data for the geographic area.

At block 806, a connection is created in the road segment datastore between each segment in each pair of segments that corresponds to a pair of physical road segments that intersect. Each connection may be instantiated as an edge object in a graph data structure that connects two or more node objects. Each connection, or edge, in the road segment datastore may include connectivity attributes, such as a ramp direction attribute, a speed limit differential attribute, a number of segments in proximity to an intersection attribute, an intersection angle attribute, movement restriction attributes, a cross traffic attribute, a cross traffic protection attribute, and/or other similar attributes describing the characteristics and properties of the physical intersection between the two corresponding physical road segments. In some embodiments, the connectivity attributes are derived from the digital map data for the geographic area.

At block 808, the risk attribute for each segment is updated in the road segment datastore based on attributes for the segment, attributes for connected segments, and attributes for the connections between the segment and the connected segments. In some embodiments, the risk attribute for each segment is updated by a segment-level crash-risk prediction model, such as risk prediction model 215 described above. For example, when executed on a road segment datastore, a crash-risk prediction model may generate a crash risk assessment or classification for each particular segment based on: the segment attributes (e.g., static segment attributes and/or dynamic segment attributes) for the particular segment; the risk and/or segment attributes for one or more segments from which there is a connection to the particular segment; and/or the connectivity attributes for each connection between the particular segment and the one or more segments.

In some embodiments, the crash risk assessment or classification for each segment is generated using a GNN trained to classify segment-level risk within a graph data structure. The GNN may be trained to predict a crash rate for each segment using truth data comprising locations of known vehicle crashes within the geographic area. In some embodiments, such a GNN may be trained to minimize a value of a Poisson loss function that provides an expected number of crashes for any given segment of the plurality of segments.

In some embodiments, method 800 further includes generating a crash risk map representing the crash risk associated with each physical road segment within the geographic area. For example, after updating and/or generating the crash risk assessment or classification for each segment in the road segment datastore, a simplified version of the road segment datastore may be generated as a crash risk map. The crash risk map may include each physical road segment within the geographic area and its respective crash risk attribute. In some embodiments, the crash risk map may be output as digital map data and/or existing digital map data for the geographic area may be updated to include the crash risk assessments associated with each physical road segment in the digital map data.

It should be appreciated that the specific steps illustrated in FIG. 8 provide a particular method of mapping driving risk in a geographic area according to an embodiment of the present invention. Other sequences of steps may also be performed according to alternative embodiments. For example, alternative embodiments of the present invention may perform the steps outlined above in a different order. Moreover, the individual steps illustrated in FIG. 8 may include multiple sub-steps that may be performed in various sequences as appropriate to the individual step. Furthermore, additional steps may be added or removed depending on the particular applications. One of ordinary skill in the art would recognize many variations, modifications, and alternatives.

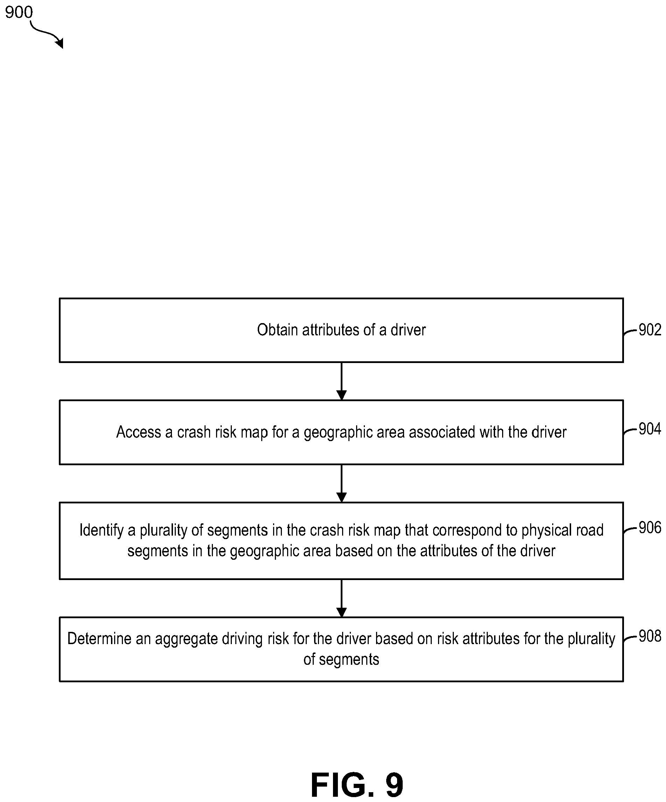

**FIG. 9** illustrates an example of a method 900 of rating driver risk according to aspects of the present disclosure. One or more blocks of method 900 may be performed by a server system, such as crash-risk modeling server system 110 described above. Additionally, or alternatively, one or more blocks of method 900 may use and/or process data from one or more mobile devices, such as mobile device 140, telematics device 150, and/or vehicle 160, as well as one or more external systems and/or services, such as map data server system 120 and/or traffic data system 130.

At block 902, attributes of a driver are obtained. Attributes of a driver may represent information and/or characteristics about a driver, such as their home, work, and/or school addresses, what make, model, and/or year vehicle does the driver typically drive, and the like. Additionally, or alternatively, attributes of a driver may include historical information related to past driving activities partaken by the driver. For example, historical information may include common routes driven by the driver within a geographic area, frequently visited locations, historical occurrences of risky driving activities performed by the driver, and the like.

In some embodiments, attributes of a driver are provided by the driver, as in the case of the driver's home address and/or vehicle information. For example, when purchasing automotive insurance, the driver may provide such basic biographical information to help the insurance company determine an appropriate insurance premium and/or coverage for the driver. Additionally, or alternatively, attributes of a driver may be derived from driving data collected during one or more trips or drives performed by the driver. For example, as described above in relation to telematics engine 212, one or more electronic devices associated with the driver, such as mobile device 140, telematics device 150, and/or vehicle 160, may collect driving data during trips in a vehicle that involve the driver driving the vehicle.

At block 904, a crash risk map for a geographic area associated with the driver is accessed. The crash risk map may represent the crash risk associated with each physical road segment within the geographic area. The crash risk map may be generated using one or more blocks of method 800, as described above. In some embodiments, the crash risk map is accessed by an insurance company when determining or updating the driver's insurance premiums and/or coverage amounts.

At block 906, a plurality of segments in the crash risk map that correspond to physical road segments in the geographic area are identified based on the attributes for the driver. In some embodiments, the plurality of segments corresponds to the physical road segments that the driver is most likely to traverse during any given driving event and/or the physical road segments the driver is likely to traverse with the highest frequency. For example, the most heavily trafficked physical road segments (e.g., as determined from traffic volume estimates) within a predefined radius of the driver's home address, such as 5 miles, 10 miles, 15 miles, or another suitable radius representing the likely distance of each driving event, may be identified as the plurality of segments in the crash risk map. As another example, the plurality of segments may correspond to the physical road segments that the driver commonly traverses (e.g., as determined from historical driving data).

At block 908, an aggregate driving risk for the driver is determined based on risk attributes for the plurality of segments. The aggregate driving risk for the driver may represent an individualized measure of risk that the driver is likely to be exposed to during any given driving event. In some embodiments, the aggregate driving risk for the driver is determined by compiling (e.g., adding, averaging, and the like) the crash risk attributes associated with each of the plurality of identified segments. The aggregate driving risk for the driver may further be based on the driver's own intrinsic risk attributes. For example, based on historical driving data for the driver, the frequency with which the driver performs risk related driving activities (e.g., speeding, hard braking, and the like) may be used to determine the driver's risk of causing an accident.

As described above, an insurance company may use the aggregate driving risk for the driver when setting the insurance premium and/or coverage amounts for the driver. As another example, the aggregate driving risk for the driver may be provided to the driver with suggestions for reducing or minimizing their risk of being involved in an accident. For example, the driver may receive the aggregate driving risk and one or more reasons or factors explaining the driver's risk, such as commonly traveled routes that may be less safe compared to other routes, locations or regions within the geographic area where the aggregate risk of being involved in an accident is higher, and the like. Additionally, or alternatively, the driver may be provided with actions or suggestions for how the driver can reduce their aggregate driving risk, such as taking a safer route between home and work, avoiding mobile device use while driving, and the like.

It should be appreciated that the specific steps illustrated in FIG. 9 provide a particular method of rating driver risk according to an embodiment of the present invention. Other sequences of steps may also be performed according to alternative embodiments. For example, alternative embodiments of the present invention may perform the steps outlined above in a different order. Moreover, the individual steps illustrated in FIG. 9 may include multiple sub-steps that may be performed in various sequences as appropriate to the individual step. Furthermore, additional steps may be added or removed depending on the particular applications. One of ordinary skill in the art would recognize many variations, modifications, and alternatives.

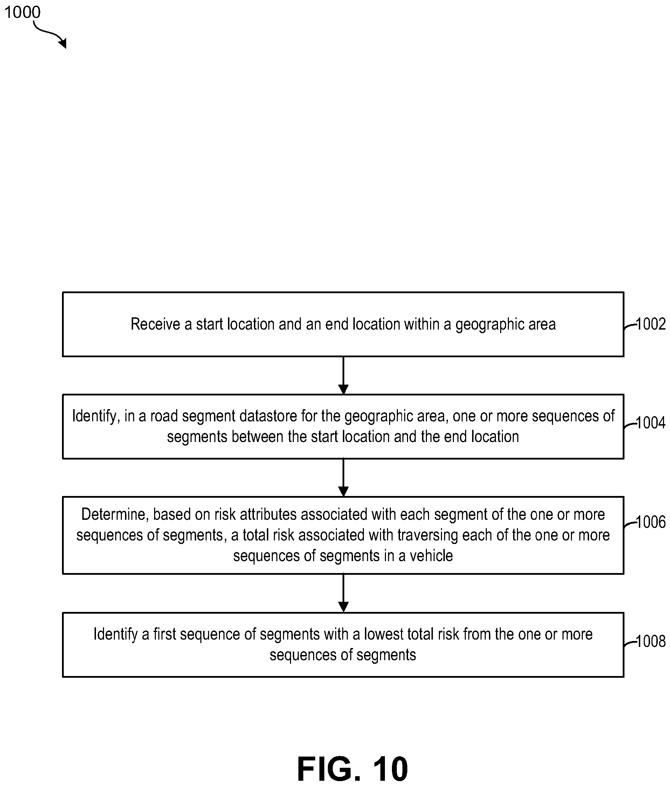

**FIG. 10** illustrates an example of a method 1000 of risk-based trip routing according to aspects of the present disclosure. One or more blocks of method 1000 may be performed by a server system, such as crash-risk modeling server system 110 described above. Additionally, or alternatively, one or more blocks of method 1000 may use and/or process data from one or more mobile devices, such as mobile device 140, telematics device 150, and/or vehicle 160, as well as one or more external systems and/or services, such as map data server system 120 and/or traffic data system 130.

At block 1002, a start location and an end location within a geographic area are received. In some embodiments, the start location and the end location are received as part of a navigation request. For example, a driver may submit the start and end locations with a request for a route between the two locations. Additionally, or alternatively, the start and end location may be received along with a sequence of road segments that forms a route between the two locations. For example, the sequence of road segments may be determined from historical driving data collected by a telematics enabled device (e.g., mobile device 140 and/or telematics device 150) during a driving event that traversed the sequence of segments between the start and end locations.

At block 1004, one or more sequences of segments between the start location and the end location are identified in a road segment datastore for the geographic area. The road segment datastore for the geographic area may be the same, or be generated in a similar manner, as described above in relation to method 800. For example, the datastore may include a plurality of segments that correspond to physical road segments in the geographic area. Each segment may have a crash risk attribute representing the extrinsic crash risk of any given traversal of the corresponding physical road segment by vehicle. Additionally, or alternatively, the road segment datastore may be represented as a crash risk map, as further described above in relation to method 800.

In some embodiments, the one or more sequences of segments includes every possible unique sequence of segments between the start and end location. Additionally, or alternatively, the one or more sequences of segments may include sequences of segments that meet one or more predefined criteria. For example, the predefined criteria may include a maximum distance deviation from the distance associated with the shortest possible route between the start and end locations. As another example, the predefined criteria may include a maximum time deviation from the time associated with the fastest possible route between the start and end locations. In some embodiments, the predefined criteria are received with the start and end location. For example, when submitting a navigation request between start and end locations, a driver may specify one or more routing parameters and/or criteria to be used, such as a preference for the shortest possible route, or the safest possible route with a total distance that is no longer than a predefined distance deviation of the shortest possible route.

At block 1006, a total risk associated with traversing each of the one or more sequences of segments in a vehicle is determined based on the risk attributes associated with each segment of the one or more sequences of segments. At block 1008, a first sequence of segments with a lowest total risk from the one or more sequences of segments is identified. In some embodiments, the first sequence of segments may be provided to a driver as a possible route between the start and end locations. For example, after submitting a request for navigation between the start and end locations, a mobile device associated with a driver may be caused to display the first sequence of segments as a suggested route for the driver to follow. Additionally, or alternatively, the driver may receive one or more sequences of segments in addition to the first sequence of segments. For example, a driver may receive the first sequence of segments identified as the safest route and a second sequence of segments identified as a commonly traversed route by the driver for comparison.

It should be appreciated that the specific steps illustrated in FIG. 10 provide a particular method of risk-based trip routing according to an embodiment of the present invention. Other sequences of steps may also be performed according to alternative embodiments. For example, alternative embodiments of the present invention may perform the steps outlined above in a different order. Moreover, the individual steps illustrated in FIG. 10 may include multiple sub-steps that may be performed in various sequences as appropriate to the individual step. Furthermore, additional steps may be added or removed depending on the particular applications. One of ordinary skill in the art would recognize many variations, modifications, and alternatives.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

Implementation of the techniques, blocks, steps, and means described above may be done in various ways. For example, these techniques, blocks, steps, and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), mask programmable gate array (MPGA), processors, controllers, micro-controllers, microprocessors, other electronic units designed to perform the functions described above, and/or combinations thereof.

Also, it is noted that the embodiments and/or examples may be described as a process which is depicted as a flowchart, a flow diagram, a swim diagram, a data flow diagram, a structure diagram, or a block diagram. Although a depiction may describe the operations as a sequential process, many of the operations can be performed in parallel or concurrently. In addition, one or more of the operations may be performed out-of-order from the order depicted. A process may terminate when its operations are completed or return to a previous step or block. A process could have additional steps or blocks not included in the figure. A process may correspond to a method, a function, a procedure, a subroutine, a subprogram, etc. When a process corresponds to a function, its termination corresponds to a return of the function to a calling function or a main function.

Furthermore, the devices and/or systems described herein may be implemented by hardware, software, scripting languages, firmware, middleware, microcode, hardware description languages, and/or any combination thereof. When implemented in software, firmware, middleware, scripting language, and/or microcode, the program code, or code segments to perform the necessary tasks may be stored in a non-transitory computer-readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any non-transitory computer-readable medium tangibly embodying instructions may be used in implementing the methodologies described herein. For example, software codes may be stored in a memory. Memory may be implemented within the processor or external to the processor. As used herein, the term "memory" refers to any type of volatile, non-volatile, or other storage medium and is not to be limited to any particular type of memory, number of memories, or type of media upon which memory is stored.

Moreover, as disclosed herein, the term "storage medium" may represent one or more memories for storing data, including read only memory (ROM), random access memory (RAM), magnetic RAM, cache memory, magnetic disk storage mediums, optical storage mediums, flash memory devices, and/or other machine-readable mediums for storing information. The term "computer-readable medium" includes, but is not limited to, portable or fixed storage devices, optical storage devices, and/or various other storage mediums capable of storing that contain or carry instruction(s) and/or data.

The examples and embodiments described herein are for illustrative purposes only. Various modifications or changes in light thereof will be apparent to persons skilled in the art. These are to be included within the spirit and purview of this application, and the scope of the appended claims, which follow.

## Claims

1. A computer-implemented method of mapping driving risk in a geographic area, the computer-implemented method comprising:
instantiating, in a road segment datastore, a plurality of segments, wherein each segment of the plurality of segments has a corresponding physical road segment of a plurality of physical road segments in the geographic area, and wherein each segment of the plurality of segments comprises:
segment attributes derived from digital map data for the corresponding physical road segment; and
a risk attribute;
determining, from the digital map data, pairs of physical road segments that intersect, wherein each pair of physical road segments that intersect has a corresponding pair of segments in the road segment datastore, and each segment of the plurality of segments is included in at least one pair of segments;
creating, in the road segment datastore, a connection between each segment in each pair of segments, wherein the connection between each pair of segments in the road segment datastore comprises connectivity attributes derived from the digital map data; and
updating, in the road segment datastore, the risk attribute for each segment of the plurality of segments that is connected to one or more paired segments based on:
the segment attributes for the segment;
the segment attributes for the one or more paired segments; and
the connectivity attributes between the segment and the one or more paired segments.

2. The computer-implemented method of claim 1, wherein the connectivity attributes include one or more of a ramp direction attribute, a speed limit differential attribute, a number of segments in proximity to an intersection attribute, an intersection angle attribute, movement restriction attributes, a cross traffic attribute, or a cross traffic protection attribute.

3. The computer-implemented method of claim 1, wherein the risk attribute for each segment of the plurality of segments is updated by a segment-level crash-risk prediction model executed on the plurality of segments and the connection between each pair of segments in the road segment datastore.

4. The computer-implemented method of claim 3, wherein the segment-level crash-risk prediction model uses a graph neural network (GNN) and the computer-implemented method further comprises:
receiving truth data comprising locations of known vehicle crashes within the geographic area; and
training the GNN to predict a crash rate for each segment using the truth data.

5. The computer-implemented method of claim 4, wherein the GNN is trained to minimize a value of a Poisson loss function that provides an expected number of crashes for a given segment of the plurality of segments.

6. The computer-implemented method of claim 1, wherein the risk attribute for a segment represents a crash rate per traversal of the segment and the computer-implemented method further comprises:
receiving, from a mobile device, a start location and an end location within the geographic area;
identifying, in the road segment datastore, a sequence of segments between the start location and the end location that results in a lowest total crash rate compared to a second sequence of segments between the start location and the end location; and
causing the mobile device to display a route on a map of the geographic area that comprises the sequence of segments between the start location and the end location.

7. The computer-implemented method of claim 6, wherein the start location, the end location, and the second sequence of segments are identified from sensor data collected by the mobile device during a trip in a vehicle.

8. The computer-implemented method of claim 1, further comprising generating an aggregate risk attribute for the geographic area based on one or more risk attributes in the road segment datastore.

9. The computer-implemented method of claim 1, wherein the segment attributes for each segment of the plurality of segments comprise static segment attributes and dynamic segment attributes, and wherein the dynamic segment attributes comprise traffic risk attributes and a traffic volume attribute.

10. The computer-implemented method of claim 9, wherein the static segment attributes include one or more of a segment curvature attribute, a number of lanes attribute, a speed limit attribute, a directionality attribute, a traffic median attribute, a ramp attribute, a lane marker attribute, traffic control signage attributes, a bicycle lane attribute, a pedestrian crossing attribute, or a street light attribute.

11. The computer-implemented method of claim 9, further comprising:
receiving sensor data collected by a telematics device disposed in a vehicle during a traversal of a physical road segment of the plurality of physical road segments for each traversal of a plurality of traversals of the physical road segment; and
updating the traffic volume attribute for a segment in the road segment datastore that corresponds to the physical road segment based on the sensor data received for each traversal of the plurality of traversals.

12. The computer-implemented method of claim 11, further comprising:
detecting, for each respective traversal of the plurality of traversals, risk-related driving attributes from the sensor data; and
updating the traffic risk attributes for the segment in the road segment datastore based on the risk-related driving attributes derived for each respective traversal of the plurality of traversals.

13. The computer-implemented method of claim 12, wherein:
the risk-related driving attributes include one or more of a speeding attribute, a hard braking attribute, a hard acceleration attribute, a hard cornering attribute, or a distracted driving attribute; or
wherein updating the traffic risk attributes for the segment in the road segment datastore comprises:
determining, from the risk-related driving attributes derived for each respective traversal of the plurality of traversals, a frequency of each risk-related driving attribute.

14. A crash-risk system, comprising:
a crash-risk modeling server system, comprising:
a road segment datastore;
one or more processors; and
a memory storing a set of instructions which, when executed by the one or more processors, cause the one or more processors to perform operations comprising:
receiving digital map data for a geographic area;
instantiating, in the road segment datastore, a plurality of segments, wherein each segment of the plurality of segments has a corresponding physical road segment of a plurality of physical road segments in the geographic area, and wherein each segment of the plurality of segments comprises:
segment attributes derived from the digital map data for the corresponding physical road segment; and
a risk attribute;
determining, from the digital map data, pairs of physical road segments that intersect, wherein each pair of physical road segments that intersect has a corresponding pair of segments in the road segment datastore, and each segment of the plurality of segments is included in at least one pair of segments;
creating, in the road segment datastore, a connection between each segment in each pair of segments, wherein the connection between each pair of segments in the road segment datastore comprises connectivity attributes derived from the digital map data; and
updating, in the road segment datastore, the risk attribute for each segment of the plurality of segments that is connected to one or more paired segments based on:
the segment attributes for the segment;
the segment attributes for the one or more paired segments; and
the connectivity attributes between the segment and the one or more paired segments.

15. A non-transitory machine-readable storage medium, including instructions that, when executed by one or more processors of a crash-risk system, cause the one or more processors to perform operations comprising:
instantiating, in a road segment datastore, a plurality of segments, wherein each segment of the plurality of segments has a corresponding physical road segment of a plurality of physical road segments in a geographic area, and wherein each segment of the plurality of segments comprises:
segment attributes derived from digital map data for the corresponding physical road segment; and
a risk attribute;
determining, from the digital map data, pairs of physical road segments that intersect, wherein each pair of physical road segments that intersect has a corresponding pair of segments in the road segment datastore, and each segment of the plurality of segments is included in at least one pair of segments;
creating, in the road segment datastore, a connection between each segment in each pair of segments, wherein the connection between each pair of segments in the road segment datastore comprises connectivity attributes derived from the digital map data; and
updating, in the road segment datastore, the risk attribute for each segment of the plurality of segments that is connected to one or more paired segments based on:
the segment attributes for the segment;
the segment attributes for the one or more paired segments; and
the connectivity attributes between the segment and the one or more paired segments.
